## Europäisches Patentamt
## European Patent Office
## Office européen des brevets

(11) Veröffentlichungsnummer: **0 447 986 A2**

# EUROPÄISCHE PATENTANMELDUNG

(21) Anmeldenummer: **91104040.0**

(51) Int. Cl.5: **G01N 19/04**

(22) Anmeldetag: **15.03.91**

(30) Priorität: **21.03.90 DE 4009081**

(43) Veröffentlichungstag der Anmeldung:
**25.09.91 Patentblatt 91/39**

(84) Benannte Vertragsstaaten:
**AT BE CH DE DK ES FR GB GR IT LI LU NL SE**

(71) Anmelder: **MADAUS Aktiengesellschaft**
**Ostmerheimer Strasse 198 Postfach 91 05 55**
**W-5000 Köln 91(DE)**

(72) Erfinder: **Nolte, Roger**
**Rüdigerstrasse 35**
**W-5000 Köln 91(DE)**
Erfinder: **Röhrig, Herbert**
**Ferdinand-Schmitz-Strasse 32**
**W-5060 Berg.-Gladbach 1(DE)**
Erfinder: **Roth, Franz-Josef**
**Hameler Weg 38**
**W-5000 Köln 91(DE)**

(54) **Prüfgerät.**

(57) Prüfgerät zur Bestimmung der Haftfestigkeit der Schutzlackierung des Tubenmantels von Tuben, bestehend aus einer Grundplatte mit einer vertieften Aufnahme für die Tubenschulter mit Gewindehals und aus einem an das offene Ende des Tubenmantels angreifenden Stauchorgan, welches eine motorisch in zwei Richtungen bewegte Stange ist und gegen die Grundplatte bewegbar ist. Die Stange weist an ihrem der Grundplatte zugewandten Ende einen Klemmkopf zur Einspannung des offenen Tubenmantelendes auf. In der konischen Aufnahme der Grundplatte ist eine Innengewindebohrung zum Einschrauben des Gewindehalses der Tube ausgebildet.

EP 0 447 986 A2

Die Erfindung bezieht sich auf ein Prüfgerät zur Bestimmung der Haftfestigkeit der Schutzlackierung des Tubenmantels von Tuben, bestehend aus einer Grundplatte mit einer vertieften Aufnahme für die Tubenschulter mit Gewindehals und aus einem an das offene Ende des Tubenmantels angreifenden Stauchorgan, das gegen die Grundplatte bewegbar ist.

Zylindrische und konische Tuben aus Aluminium sind innen und außen mit einer Schutzlackierung versehen, die sich durch hohe Haftfestigkeit auszeichnen muß, damit sie bei der Quetsch- und Aufrollverformung bei der Entleerung der Tube nicht reißt bzw. von dem Aluminium ablöst, was bei der Innenschutzlackierung zu Beeinträchtigungen des Tubeninhaltes führt. Zur Prüfung der Schutzlackierung wird bisher ein Prüfgerät verwendet, welches von der Grundplatte aufragende Führungssäulen aufweist, an denen ein von Hand gegen die Grundplatte gedrückter Stauchbügel entlanggleitet, der gegen das obere offene Ende der Tube anliegt. Der Stauchbügel ist mit einem Loch zum Durchlaß eines Führungsdorns versehen, der lose in das Tubeninnere eingesetzt ist. Von Hand wird durch möglichst gleichmäßiges Drücken mit einer vorgeschriebenen Stauchgeschwindigkeit von 100 bis 400 mm/s der Tubenmantel ziehharmonikaartig zusammengedrückt. Der zusammengedrückte Tubenmantel wird sodann aus dem Prüfgerät herausgenommen und manuell in Achsrichtung auseinandergezogen. An den auseinandergezogenen Tuben werden die Stauchkanten auf Rißbildung bzw. Ablösung der Innen- und Außenschutzlackierung visuell untersucht. Bei diesem manuell arbeitenden Stauchgerät ist die Einhaltung der vorgegebenen Stauchgeschwindigkeit schwierig und bei einer Serie zu prüfender Tuben praktisch nicht reproduzierbar. Außerdem ist das Auseinanderziehen der gestauchten Tuben von Hand umständlich und kraftaufwendig. Da dabei Verwindungen und Biegungen des Tubenmantels nicht ausgeschlossen sind, können solche zufälligen Zusatzbeanspruchungen das Prüfungsergebnis verfälschen.

Der Erfindung liegt die Aufgabe zugrunde, ein Prüfgerät zu schaffen, das automatisch zuverlässige Prüfergebnisse erbringt, die jederzeit reproduzierbar sind.

Diese Aufgabe wird erfindungsgemäß dadurch gelöst, daß das Stauchorgan eine motorisch in zwei Richtungen bewegte Stange ist, die an ihrem der Grundplatte zugewandten Ende einen Klemmkopf zur Einspannung des offenen Tubenmantelendes aufweist und daß in der konischen Aufnahme der Grundplatte eine Innengewindebohrung zum Einschrauben des Gewindehalses der Tube ausgebildet ist.

Ein solches Prüfgerät arbeitet mit einer festen Stauchgeschwindigkeit, die insbesondere 157 mm/s beträgt und mit der gleichen Geschwindigkeit wird der ziehharmonikaartig zusammengedrückte, an seinen Enden eingespannte Tubenmantel auch in Achsrichtung auseinandergezogen. Mit hoher Zuverlässigkeit wird jede Tube ziehharmonikaartig bis auf (15 ± 5)% der Tubenmantellänge zusammengedrückt, wobei die Stauch- und Streckgeschwindigkeiten bei allen Prüfungen gleich sind. Die ermittelten Ergebnisse sind durch den Wegfall jeglicher manueller Handhabungen jederzeit reproduzierbar.

Jeder geradlinig auseinandergezogene Tubenmantel wird axial aufgeschnitten und flachgelegt, so daß eine auf beiden Seiten gut überschaubare knittrige Materialbahn für die visuelle Untersuchung vorliegt.

In vorteilhafter Ausgestaltung der Erfindung ist vorgesehen, daß die Stange in einer Führung eines Jochbügelständers gelagert und über eine äußere Zahnstangenprofilierung von einem mit einem Elektromotor gekuppelten Antriebselement angetrieben ist und daß die Stange ein Kontaktglied trägt, das mit höhenmäßig verteilt angeordneten Endschaltern zusammenwirkt. Der Jochbügelständer ist stehend angeordnet und die Führung befindet sich vorzugsweise am Ende seines etwa waagerechten oberen Armes. Zur Kupplung des als Antriebselement dienenden Zahnrades mit dem Elektromotor dient ein Zahnriemen, der außerhalb des Jochbügelständers um Riemenscheiben umläuft. Die höhenmäßig verteilten Endschalter an einer mit dem Jochbügelständer verbundenen senkrechten Leiste dienen der Einstellung des Stauchweges in Abhängigkeit von der jeweiligen Tubenmantellänge.

Der Jochbügelständer und der Elektromotor sind vorteilhafterweise in einem Gehäusekasten aus durchsichtigem Material untergebracht, der im Bereich von Grundplatte und Klemmkopf eine durch eine Schwenkklappe verschlossene Gehäuseöffnung aufweist, durch die die Tube in dem Prüfgerät befestigt bzw. von diesem abgenommen werden kann. Die Funktion des Prüfgerätes kann durch den durchsichtigen Gehäusekasten beobachtet werden. In rascher Aufeinanderfolge lassen sich eine Vielzahl von Tuben mit gleichmäßiger Arbeitsgeschwindigkeit stauchen und strecken, so daß durch beschleunigte Qualitätskontrolle ein größerer Anteil einer Tubenproduktion geprüft und das allgemeine Qualitätsniveau angehoben werden kann. Die Schwenkklappe löst über ein Betätigungselement einen Motor-Sicherheitsschalter aus, der den Motorstart erst bei geschlossener Schwenkklappe ermöglicht. Der Elektromotor ist mittels eines außerhalb des Gehäusekastens angeordneten elektrischen Steuergerätes steuerbar.

In der Stange ist eine ihre beiden Enden überragende federbelastete Spindel axial verstellbar, deren der Grundplatte zugewandtes Ende mit einem Spannteil des Klemmkopfes verbunden ist, der über einen Keilkörper mit einer ihn konzentrisch umgebenden radial spreizbaren Spannhülse zusammenwirkt, die mit einer Außenhülse einen ringförmigen Klemmspalt mit offener Einsteckmündung für das Tubenmantelende begrenzt. Zur Anwendung bei Tubenmänteln mit kreisförmigem Querschnitt sind die Grenzflächen von Spannhülse und Außenhülse am Klemmspalt kreiszylindrisch. Der Rand des Tubenmantels stößt gegen eine Radialschulter am oberen Ende des Klemmspaltes, so daß keine gegenseitige Verschiebung während des Stauchvorganges stattfindet. Beim Niederdrücken der Spindel wird die Spannhülse von dem Keilkörper des Spannteiles entlastet, so daß der Klemmspalt maximale Breite hat und ein einfaches Einschieben des offenen Tubenmantelendes zuläßt. Bei Bewegung der Spindel nach oben nimmt sie den Spannteil mit, der nun über den Keilkörper die Spannhülse radial aufspreizt, wodurch der Klemmspalt verengt und das offene Ende des Tubenmantels eingespannt wird. Die Klemmkraft in dem Klemmspalt ist so stark, daß sie eine Trennung des Tubenmantels vom Klemmkopf während des Streckvorganges verhindert.

Erfindungsgemäß ist vorgesehen, daß der Spannteil und die Spannhülse im Bereich des Klemmspaltes ineinandersteckende Keilringe mit komplementären Keilflächen aufweisen, die gegen die Einsteckmündung des Klemmspaltes divergieren und daß die Spannhülse in ihrer Umfangswand mit mehreren offen endenden Längsschlitzen versehen ist. Die Spannhülse ist zylindrisch und durch die Längsschlitze wird sie in Kreisbogenabschnitte aufgeteilt, die ihre radiale Dehnung oder Zusammenziehung im Bereich des Klemmspaltes ermöglichen.

Der Spannteil ist mit einem Gewindeende der Spindel verschraubt und in der Spannhülse durch Nut-Federpassung gegen Drehung gesichert. Die Nut-Federpassung befindet sich vorzugsweise im Bereich der komplementären Keilflächen.

Die Außenkante der Spannhülse und die Innenkante der Außenhülse sind an der Einsteckmündung des Klemmspaltes entgegengesetzt gerundet. Auf diese Weise entsteht an der Einsteckmündung eine kelchartige Erweiterung, die das Einschieben des offenen Tubenmantels erleichtert. Der Außenumfang der Spannhülse ist im Bereich des Klemmspaltes dem Durchmesser des Tubenmantels so angepaßt, daß dieser auf der Spannhülse festsitzt und in diesem Bereich keine Falten oder Wellen bildet.

In der Zeichnung ist ein Ausführungsbeispiel der Erfindung schematisch dargestellt. Es zeigt:

Fig. 1 eine Seitenansicht des Prüfgerätes am Ende des Streckvorganges,

Fig. 2 eine Frontansicht des Prüfgerätes am Ende des Stauchvorganges,

Fig. 3 einen Längsschnitt durch den Klemmkopf,

Fig. 4 eine teilweise aufgeschnittene Ansicht der zu dem Klemmkopf gehörenden Spannhülse,

Fig. 5 eine Unteransicht der Spannhülse nach Figur 4 und

Fig. 6 einen Teilschnitt des Spannteiles vor der Montage eines Verdrehsicherungselementes.

Das Prüfgerät 10 zur Bestimmung der Haftfestigkeit der Schutzlackierung des Tubenmantels 1 einer Tube besteht aus einem J-förmigen Jochbügelständer 11, dessen Säule 12 auf einer Basis 13 montiert ist und dessen etwa waagerechter oberer Arm 14 am freien Ende eine senkrechte Lagerbuchse 15 zur Führung einer geraden Stange 20 aufweist. Die Stange 20 dient als Stauchorgan. Sie hat im wesentlichen kreisförmigen Querschnitt und ist an einer Seite mit einer längsverlaufenden Zahnstangenprofilierung 21 ausgestattet. Die Zahnstangenprofilierung 21 greift mit einem gezahnten Antriebselement zusammen, das in einer zu der Lagerbuchse 15 querverlaufenden zweiten Lagerbuchse 16 des Armes 14 untergebracht ist. Eine Antriebswelle 22 des Antriebselementes steht an einem Ende über die zweite Lagerbuchse 16 nach außen vor und ist an einer Riemenscheibe 17 von einem endlosen Zahnriemen 23 umschlungen, dessen andere Umlenkstelle an eine Riemenscheibe 18 auf der Welle eines Elektromotors 19 angreift. Der Elektromotor 19 ist - in Frontansicht des Prüfgerätes 10 - hinter der Säule 12 des Jochbügelständers 11 auf der Basis 13 festgeschraubt. An der Vorderseite der Säule 12 ist eine senkrechte Leiste 27 montiert, an der drei Endschalter 28 befestigt sind, mit denen ein von der Stange 20 abstehendes Kontaktglied 29 zusammenwirkt, um, je nach Länge des zu prüfenden Tubenmantels 1, den Stauchweg zu definieren.

Aus Sicherheitsgründen ist das Prüfgerät 10 in einem Gehäusekasten 65 untergebracht, der allseitig geschlossen ist und vorzugsweise aus durchsichtigem Kunststoff besteht. Der Hantierungsbereich des Prüfgerätes ist durch eine Gehäuseöffnung zugänglich, die durch eine um eine obere waagerechte Achse 67 drehbare Schwenkklappe 66 zugänglich ist. Die Schwenkklappe 66 ist an einem Ende mit einer Kreisscheibe 68 verbunden, die einen teilkreisförmigen Ausschnitt 69 aufweist, der bei geschlossener Schwenkklappe 66 einwärts gerichtet ist und eine Rolle 70 eines Motor-Sicherheitsschalters 71 aufnimmt. Die Rolle 70 befindet sich an einem schwenkbaren Hebel, der bei geöffneter Schwenkklappe 66 von dem Kreisumfang der Scheibe 68 gegen einen Ausschaltknopf des Motor-Sicherheitsschalters 71 drückt, so daß der Motor 19 bei geöffneter Schwenkklappe 66 nicht anläuft. Bei geschlossener Schwenkklappe 66 wird der Elektromotor 19 mittels eines außerhalb des Gehäusekastens 65 vorgesehenen elektrischen Steuergerätes in gewünschter Weise geschaltet.

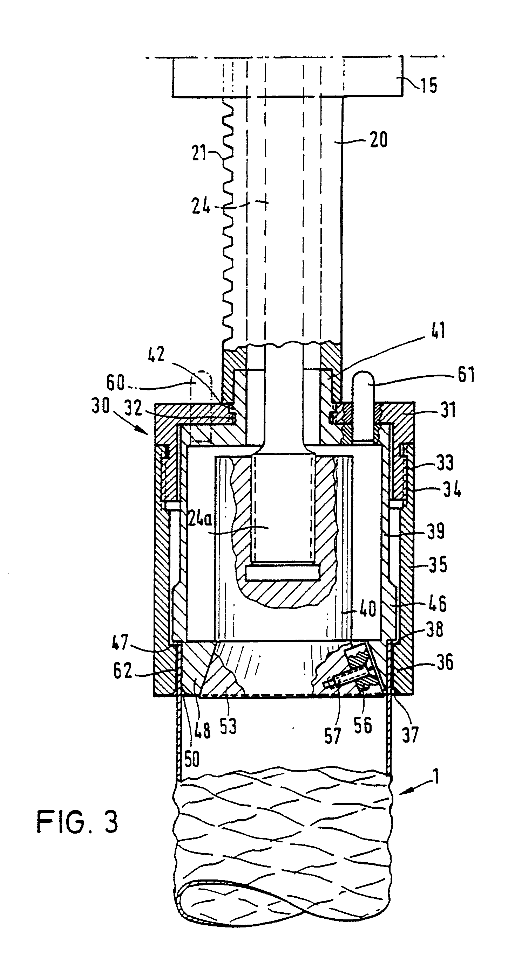

Die Stange 20 ist hohl und enthält eine gerade Spindel 24 (Fig. 3), deren oberes Ende einen über die Stange 20 etwas vorstehenden Mehrkant trägt, auf den eine Handhabe 25 abnehmbar aufsteckbar ist. Das untere Ende der Spindel 24 weist einen Gewindeabschnitt 24a auf, der über das untere Ende der Stange 20 vorragt. Durch Drehen der Handhabe 25 wird die Spindel 24 nach oben oder nach unten bewegt und bewirkt dadurch, daß sich ein Spannteil öffnet oder schließt.

Der Zweck dieser Funktion wird im Zusammenhang mit den Darstellungen eines mit der Spindel 24 verbundenen Klemmkopfes 30 gemäß Figuren 3 bis 6 näher erläutert.

Auf der Basis 13 ist lotrecht unter der Stange 20 eine Grundplatte 26 befestigt, die eine zentrale trichterförmige Vertiefung 27 aufweist, in deren Spitze eine Innengewindebohrung ausgebildet ist. Gegen die kreiskegelförmige Wandung der trichterförmigen Vertiefung 27 liegt die schräge Schulter des Tubenmantels 1 an, wenn das Tubengewinde in die Innengewindebohrung eingeschraubt ist. Um dies zu bewerkstelligen, ist die Stange 20 hochgefahren und der bei dem dargestellten Beispiel kreiszylindrische Tubenmantel 1 ragt nach oben, so daß seine obere kreisförmige Öffnung dem Klemmkopf 30 des Prüfgerätes 10 zentriert gegenüberliegt.

Der Klemmkopf 30 besteht aus mehreren im wesentlichen kreiszylindrischen Teilen, die koaxial zusammengesetzt sind. Alle Bestandteile sind aus hochwertigem Stahl gefertigt. Eine kreiszylindrische Kappe 31 ist in ihrem oben befindlichen Boden mit einer zentralen Öffnung 32 ausgestattet und ihr verhältnismäßig kurzer Mantel weist am freien Ende ein Außengewinde 33 auf. Das Außengewinde 33 der Kappe 31 ist mittels eines Innengewindes 34 am freien Ende einer kreiszylindrischen Außenhülse 35 mit dieser verschraubt. Die Außenumfänge der beiden Teile verlaufen bündig. Am unteren Rand der Außenhülse 35 ist ein umlaufender Innenbund 36 mit kreiszylindrischer Innenfläche angeformt, dessen untere Innenkante 37 gerundet ist, während seine obere Flanke 38 rechtwinklig verläuft. Vor dem Zusammenschrauben der Teile 31 und 35 wird in die Außenhülse 35 eine Spannhülse 39 eingesetzt, die einen Spannteil 40 enthält.

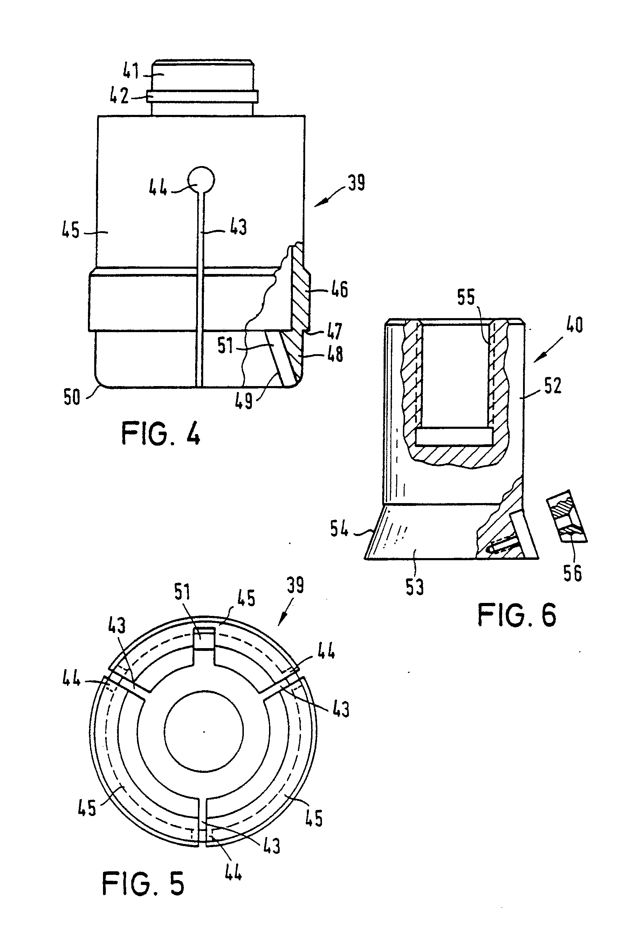

Die Spannhülse 39 ist in den Figuren 4 und 5 veranschaulicht. Sie hat ebenfalls kreiszylindrische Becherform und ihr oberes Ende paßt in die Kappe 31, wobei sie mit einem an ihrem Boden angeformten Hohlstutzen 41 durch die zentrale Öffnung 32 nach außen ragt und ein Außenringbund 42 des Hohlstutzens 41 in der Öffnung 32 z.B. verschraubt ist. Drei parallelrandige Längsschlitze 43, die jeweils von einer Lochöffnung 44 in der oberen Hälfte der Wand der Spannhülse 39 ausgehen, enden an dem unteren Rand der Spannhülse 39 offen und teilen sie in drei Bogensegmente 45 auf, die radial auslenkbar sind, so daß die Spannhülse 39 sich in ihrem unteren Bereich aufweiten läßt. Der untere Randbereich der Spannhülse 39 bildet einen Keilring 48 mit kreiszylindrischer Außenfläche und nach unten divergierender kreisförmiger innerer Keilfläche 49. An einer Stelle der Keilfläche 49 ist eine längsverlaufende Nut 51 ausgebildet, die sich über die gesamte Höhe des Keilringes 48 erstreckt. Die Außenkante 50 der Spannhülse 39 ist entgegengesetzt zu der Innenkante 37 der Außenhülse 35 gerundet. Zwischen dem kreiszylindrischen Außenumfang des Keilringes 48 und dem kreiszylindrischen Innenumfang des Innenbundes 36 der Außenhülse 35 verbleibt ein Klemmspalt 62 zur Aufnahme des oberen offenen Endes des Tubenmantels 1. Am inneren Ende des Klemmspaltes 62 ist die Spannhülse 39 mit Abstand von ihrem unteren offenen Rand mit einer äußeren Ringwulst 46 versehen, deren untere Flanke 47 neben der oberen Flanke 38 des Innenbundes 36 der Außenhülse 35 rechtwinklig von der kreiszylindrischen Mantelfläche absteht.

Kernstück des Klemmkopfes 30 ist der Spannteil 40, der einteilig aus einem kreiszylindrischen Schaft 52 und einem an ein Ende angeformten Keilring 53 besteht, dessen äußere Keilfläche 54 nach unten divergiert und deren Neigungswinkel und axiale Länge der Keilfläche 49 der Spannhülse 39 angepaßt sind. In dem Schaft 52 befindet sich eine koaxiale Innengewindebohrung 55, die unten geschlossen ist und nach oben offen ist. Sie dient der Verschraubung des Spannteiles 40 mit dem Gewindeende 24a der Spindel 24. Der Spannteil 40 ist in der Spannhülse 39 axial beweglich, jedoch undrehbar vorgesehen. Als Verdrehsicherung dient die Nut 51 in dem Keilring 48, in die ein Paßteil 56 eingefügt ist, der mittels einer Schraube 57 fixiert ist und der etwa mit der Hälfte seines Dickenbereiches über die Keilfläche 54 vorsteht, so daß sich eine Nut-Federpassung als Verdrehsicherung ergibt.

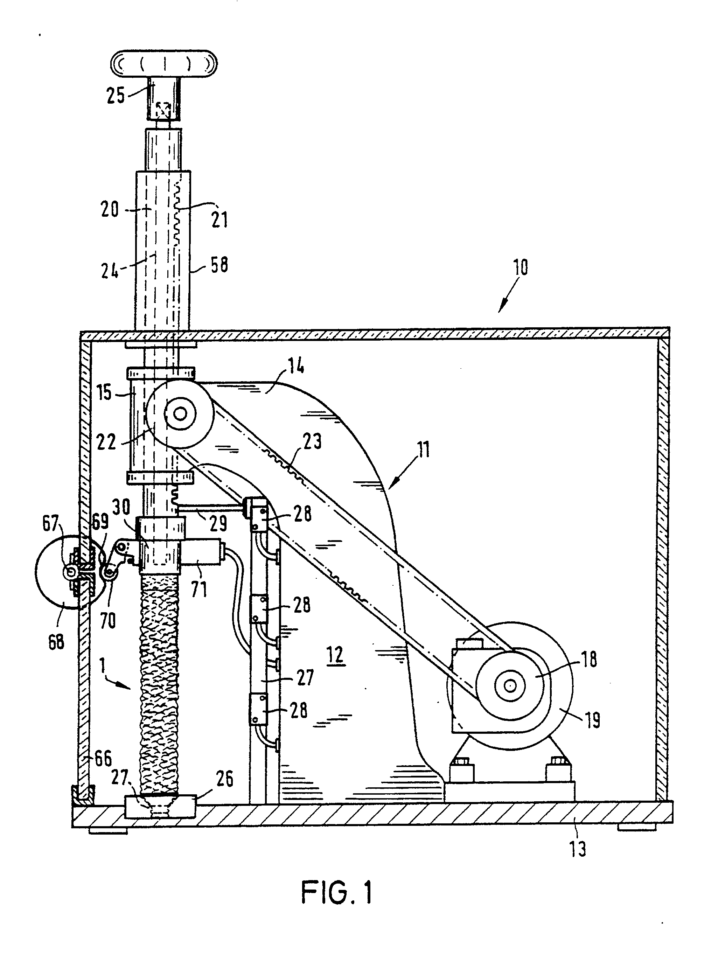

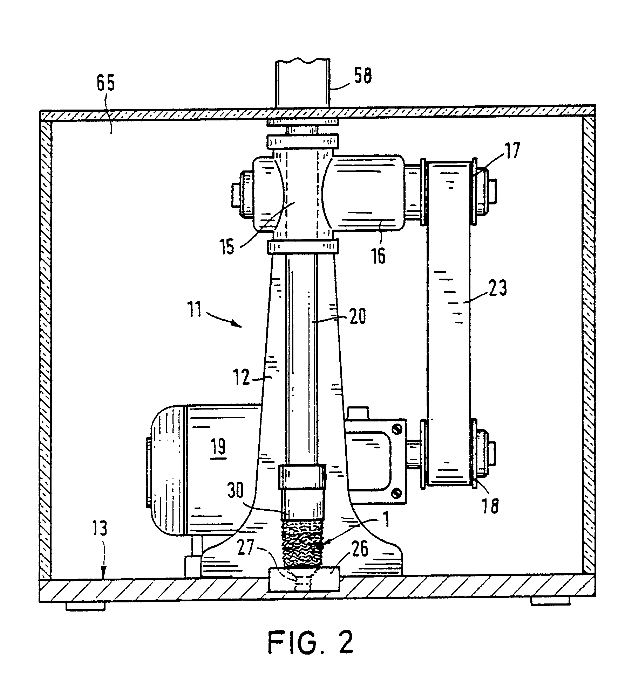

Zur Montage des Klemmkopfes 30 wird die Spannhülse 39 in die Außenhülse 35 eingesetzt und es wird der Spannteil 40 von unten her in die Spannhülse 39 eingefügt, bis die Keilringe 48, 53 ineinanderstecken. Sodann wird die Kappe 31 mit der Außenhülse 35 verschraubt, so daß sich ein allseitig geschlossener zylindrischer Körper ergibt, der durch Verschraubung des Spannteiles 40 mit der Spindel 24 an der Stange 20 befestigt wird. Bei dem fertig montierten Klemmkopf 30, der durch zwei Zentrierstifte 60, 61 in den aneinander anliegenden Bodenteilen der Kappe 31 und der Spannhülse 39 zentriert ist, hat der Klemmspalt 62 eine gewisse Breite, die veränderlich ist. Zur Aufnahme des Randes des Tubenmantels 1 bzw. zu seiner Freigabe, wird durch Herunterschrauben der Spindel 24 der Keilring 53 des Spannteiles 40 etwas aus dem Keilring 48 nach unten herausgedrückt, so daß dieser seine entspannte Grundposition einnimmt, in der der Klemmspalt 62 maximale Breite hat. Die Stirnkante des Tubenrandes wird gegen die untere Flanke 47 der Ringwulst 46 der Spannhülse 39 geschoben, so daß bei Abwärtsbewegung der Stange 20 zur Stauchung des Tubenmantels 1 keine Verschiebungen erfolgen können. Wenn durch Heraufdrehen der Spindel 24 der Keilring 53 in den Keilring 48 hineingezogen wird, spreizt das Zusammenwirken der Keilflächen 49 und 54 die Spannhülse 39 insbesondere im Bereich des Keilringes 48 radial etwas auseinander und der Tubenrand wird in dem Klemmspalt 62 festgeklemmt.Durch Senken der Stange 20 wird der Tubenmantel 1 exakt geradlinig gestaucht (Fig. 2). Die Stauchgeschwindigkeit beträgt dabei vorzugsweise 157 mm/s. Zum Auseinanderfalten der Stauchung wird die Stange 20 mit gleicher Geschwindigkeit aufwärts bewegt, so daß der an beiden Seiten festgehaltene Tubenmantel 1 gestreckt wird (Fig. 1). Anschließend wird durch Lösen der Klemmwirkung des Klemmkopfes 30 das obere Ende des Tubenmantels 1 befreit und es kann der Gewindehals aus der Grundplatte 26 herausgeschraubt werden. Zu Prüfzwecken wird der Tubenmantel 1 in Längsrichtung aufgeschnitten und untersucht.

**Patentansprüche**

1. Prüfgerät zur Bestimmung der Haftfestigkeit der Schutzlackierung des Tubenmantels von Tuben, bestehend aus einer Grundplatte mit einer vertieften Aufnahme für die Tubenschulter mit Gewindehals und aus einem an das offene Ende des Tubenmantels angreifenden Stauchorgan, das gegen die Grundplatte bewegbar ist,
**dadurch gekennzeichnet,**
daß das Stauchorgan eine motorisch in zwei Richtungen bewegte Stange (20) ist, die an ihrem der Grundplatte (26) zugewandten Ende einen Klemmkopf (30) zur Einspannung des offenen Tubenmantelendes aufweist und daß in der konischen Aufnahme der Grundplatte (26) eine Innengewindebohrung zum Einschrauben des Gewindehalses der Tube (1) ausgebildet ist.

2. Prüfgerät nach Anspruch 1,
**dadurch gekennzeichnet,**
daß die Stange (20) in einer Führung (15) eines Jochbügelständers (11) gelagert und über eine äußere Zahnstangenprofilierung (21) von einem mit einem Elektromotor (19) gekuppelten Antriebselement angetrieben ist und daß die Stange (20) ein Kontaktglied (29) trägt, das mit höhenmäßig verteilt angeordneten Endschaltern (28) zusammenwirkt.

3. Prüfgerät nach Anspruch 2,
**dadurch gekennzeichnet,**
daß der Jochbügelständer (11) und der Elektromotor (19) in einem Gehäusekasten (65) aus durchsichtigem Material untergebracht sind, der im Bereich von Grundplatte (26) und Klemmkopf (30) eine durch eine Schwenkklappe (66) verschlossene Gehäuseöffnung aufweist und daß die Schwenkklappe (66) über ein Betätigungselement (68) einen Motor-Sicherheitsschalter (71) auslöst.

4. Prüfgerät nach einem der Ansprüche 1 bis 3,
**dadurch gekennzeichnet,**
daß in der Stange (20) eine ihre beiden Enden überragende Spindel (24) axial verstellbar ist, deren der Grundplatte (26) zugewandtes Ende mit einem Spannteil (40) des Klemmkopfes (30) verbunden ist, der über einen Keilkörper mit einer ihn konzentrisch umgebenden radial spreizbaren Spannhülse (39) zusammenwirkt, die mit einer Außenhülse (35) einen ringförmigen Klemmspalt (62) mit offener Einsteckmündung für das Tubenmantelende begrenzt.

5. Prüfgerät nach Anspruch 4,
**dadurch gekennzeichnet,**
daß der Spannteil (40) und die Spannhülse (39) im Bereich des Klemmspaltes (62) ineinandersteckende Keilringe (53;48) mit komplementären Keilflächen (54;49) aufweisen, die gegen die Einsteckmündung des Klemmspaltes (62) divergieren und daß die Spannhülse (39) in ihrer Umfangswand mit mehreren offen endenden Längsschlitzen (43) versehen ist.

6. Prüfgerät nach Anspruch 4 oder 5,
**dadurch gekennzeichnet,**
daß der Spannteil (40) mit einem Gewindeende (24a) der Spindel (24) verschraubt und in der Spannhülse (39) durch Nut-Federpassung (51,56) gegen Drehung gesichert ist.

7. Prüfgerät nach einem der Ansprüche 4 bis 6,
**dadurch gekennzeichnet,**
daß die Außenkante (50) der Spannhülse (39) und die Innenkante (37) der Außenhülse (35) an der Einsteckmündung des Klemmspaltes (62) entgegengesetzt gerundet sind.

8. Prüfgerät nach einem der Ansprüche 1 bis 7,
**dadurch gekennzeichnet,**
daß der Elektromotor (19) mittels eines außerhalb des Gehäusekastens (65) angeordneten elektrischen Steuergerätes steuerbar ist.

FIG. 1

FIG. 2

FIG. 3

FIG. 4

FIG. 6

FIG. 5